# EUROPÄISCHE PATENTSCHRIFT

(11) **EP 3 746 657 B1**
(45) Veröffentlichungstag und Bekanntmachung des Hinweises auf die Patenterteilung: **16.02.2022**
(21) Anmeldenummer: 19701647.0
(22) Anmeldetag: 24.01.2019
(51) Int. Cl.: F03D 80/50

(54) **GONDEL EINER WINDENERGIEANLAGE, SOWIE WINDENERGIEANLAGE MIT GONDEL UND VERFAHREN ZUR WARTUNG EINER SOLCHEN WINDENERGIEANLAGE**
NACELLE OF A WIND TURBINE, AS WELL AS WIND TURBINE HAVING A NACELLE AND METHOD FOR THE MAINTENANCE OF A WIND TURBINE OF THIS TYPE
NACELLE D'ÉOLIENNE AINSI QU'ÉOLIENNE MUNIE D'UNE NACELLE ET PROCÉDÉ DE MAINTENANCE D'UNE TELLE ÉOLIENNE

(30) Priorität: 02.02.2018 DE 102018102428
(43) Veröffentlichungstag der Anmeldung: 09.12.2020
(73) Patentinhaber: Wobben Properties GmbH, 26607 Aurich (DE)
(72) Erfinder: KNOOP, Frank, 26607 Aurich (DE); GUDEWER, Wilko, 26506 Norden (DE); KREIKENBAUM, Joan, 26607 Aurich (DE)
(74) Vertreter: Eisenführ Speiser
(86) Internationale Anmeldenummer: PCT/EP2019/051726
(87) Internationale Veröffentlichungsnummer: WO 2019/149611

(56) Entgegenhaltungen:
- EP-A1- 2 570 653
- EP-A1- 2 620 644
- US-A- 5 649 392
- US-A1- 2013 334 819

## Beschreibung

Die vorliegende Erfindung betrifft eine Gondel einer Windenergieanlage, mit einem Maschinenträger, der dazu eingerichtet ist, an einem Turm der Windenergieanlage installiert zu werden und einen Generator sowie eine Rotornabe der Windenergieanlage zu tragen, einem an dem Maschinenträger installierten Arbeitsgerüst mit einer oder mehreren Arbeitsebenen, und einem Gondelgehäuse, welches den Maschinenträger und das Arbeitsgerüst zum Schutz vor Wettereinflüssen umschließt, wobei das Gondelgehäuse einen von dem Arbeitsgerüst aus zugänglichen Gondelkeller aufweist.

Die Gondel einer Windenergieanlage beherbergt in der Regel Steuerungselektronik in Form von Schalt- und Steuerschränken. Ferner beherbergt die Gondel gegebenfalls Messinstrumente zum Erfassen der Betriebsparameter der Windenergieanlage. All diese Komponenten müssen zusätzlich zu den für die Bewegung der Windenergieanlage und für die Stromgewinnung zuständigen Komponenten in der Gondel untergebracht werden, weswegen um den Maschinenträger herum üblicherweise Arbeitsgerüste errichtet werden. Die Arbeitsgerüste erlauben eine, wenn auch eingeschränkte, Bewegung innerhalb der Gondel und ermöglichen es dem Wartungspersonal, in kurzer Zeit zwischen verschiedenen Steuer- oder Schaltschränken oder anderen Gerätschaften hin und her zu wechseln.

Das Gondelgehäuse muss die Funktion erfüllen, das Innenleben der Gondel und vor allem die dort vorgesehen elektrischen Komponenten vor Witterungseinflüssen zu schützen und unerwünschtes Eindringen von Schmutz oder Lebewesen, etwa Vögeln oder Insekten, möglichst weitgehend zu unterbinden.

Windenergieanlagen haben in den vergangenen Jahren beträchtliche Turmhöhen erreicht. Die Gondel einer Windenergieanlage befindet sich häufig mehrere hundert Meter über der Aufstellfläche. In diesen Höhen wirken erhebliche Windlasten auf das Gondelgehäuse. Um einen möglichst geringen Windwiderstand zu erzielen, ist der freie Bewegungsraum innerhalb der Gondel üblicherweise sehr knapp bemessen. Hierunter leidet die Bewegungsfreiheit. Insbesondere tief im Gondelgehäuse liegende Elemente, die vom Arbeitsgerüst weit entfernt sind, sind dadurch nur noch schwer zu erreichen. Hierzu zählen insbesondere die Azimutantriebe, die Azimutverzahnung, der Turmflansch und/oder Teile des Generators. Es wird insbesondere von dem für die Windenergieanlage zuständigem Wartungspersonal als nachteilig empfunden. Die Dokumente EP 2 570 653 A1 und US 5 649 392 A offenbaren Gondeln, die über Arbeitsbühnen verfügen, die bei Wartungsarbeiten ausgeklappt werden können.

Der Erfindung lag somit die Aufgabe zugrunde, eine Gondel der eingangs bezeichneten Art dahingehend zu verbessern, dass der Zugang zu verschiedenen Bereichen innerhalb der Gondel für Wartungspersonal erleichtert wird.

Die Erfindung löst die ihr zugrunde liegende Aufgabe bei einer Gondel der eingangs bezeichneten Art, in dem der Gondelkeller relativ zu der Arbeitsbühne absenkbar ausgebildet ist. Die Erfindung macht sich die Erkenntnis zunutze, dass der Gondelkeller unterhalb des Arbeitsgerüsts dem Grunde nach ein Abschreiten der gesamten Gondel von ihrem vorderen rotorseitigen Ende bis zum gegenüberliegenden Ende ermöglicht. Indem der Gondelkeller abgesenkt wird, wird dieser Raum in viel größerem Umfang als zuvor nutzbar.

Die Erfindung wird vorteilhaft weitergebildet, indem das Gondelgehäuse eine Bodenverkleidung aufweist, die den Gondelkeller begrenzt, wobei die Bodenverkleidung relativ zu dem Arbeitsgerüst höhenbeweglich ausgebildet ist. Das bedeutet mit anderen Worten, dass mit dem Absenken beziehungsweise Anheben der den Gondelkeller definierenden Bodenverkleidung zugleich auch das gesamte Gondelvolumen variiert. Bei angehobenem Gondelkeller ist das Gondelvolumen durch Anheben der Gondelverkleidung geringer als in dem Zustand, wenn der Gondelkeller sich in abgesenktem Zustand befindet.

Ein geringeres Gondelvolumen hat automatisch eine geringere Windanfälligkeit, insbesondere eine geringere Seitenwindanfälligkeit zur Folge. Insbesondere in Gebieten, in denen häufig mit starken Seitenwinden zu rechnen ist, kann der Gondelkeller im Normalbetrieb in angehobenem Zustand verharren, und muss nur abgesenkt werden, wenn er zu Wartungszwecken begangen werden muss. Ferner ist ein Vorteil dieses Anlagekonzepts, dass in Aufstellgebieten, in denen nicht mit starken Seitenwinden zu rechnen ist, der Gondelkeller im Normalbetrieb im abgesenkten Zustand verharren kann, dafür aber angehoben werden kann, wenn starke Seitenwinde erwartet werden, um eine Windanfälligkeit zu reduzieren.

In einer bevorzugten Ausführungsform sind zwischen der Arbeitsbühne und der Bodenverkleidung eine oder mehrere Fixiereinrichtungen montiert. Die Fixiereinrichtungen sind vorzugsweise dazu eingerichtet, die Bodenverkleidung wahlweise zumindest in einer ersten, angehobenen Endposition, und vorzugsweise in einer zweiten, abgesenkten Endposition an dem Arbeitsgerüst zu fixieren.

Die Fixiereinrichtungen weisen vorzugsweise jeweils eine an dem Bodenelement oder dem Arbeitsgerüst befestigte Schiene und einen mit der Schiene korrespondierende und an dem jeweils anderen Element, also dem Arbeitsgerüst oder dem Bodenelement, befestigte Schienenaufnahme auf, und die Schienen sind besonders bevorzugt in den Schienenaufnahmen gleitend aufgenommen. Die Schienen erzeigen eine geführte Beweglichkeit der Bodenverkleidung relativ zu dem Arbeitsgerüst und erleichtern die Handhabung bei der Absenkung des Bodenkellers signifikant. Ein Verkippen oder seitliches Ausweichen der Bodenverkleidung wird durch die Schienen effektiv verhindert.

In einer weiteren bevorzugten Ausführungsform weisen die Fixiereinrichtungen jeweils wenigstens ein erstes Formschlusselement auf, sowie zumindest für die erste, angehobene in Endposition ein zu dem ersten Formschlusselement korrespondierendes zweites Formschlusselement. Vorzugsweise weisen die Fixiereinrichtungen für die zweite, abgesenkte Endposition ebenfalls ein zu dem ersten Formschlusselement korrespondierendes zweites Formschlusselement auf. Die ersten und zweiten Formschlusselemente der Fixiereinrichtungen können beispielsweise als Verschraubungen oder Bolzenverbindungen ausgebildet sein. Zum Beispiel können an der Schiene und der Schienenaufnahme vorzugsweise Durchgangsbohrungen vorgesehen sein, die eine Arretierung der Bodenverkleidung am Arbeitsgerüst sowohl in der ersten Endposition als auch in der zweiten Endposition mittels fluchtenden Ausrichtens der entsprechenden Ausgangsbohrung ermöglichen, wobei die Fixierung in der ersten beziehungsweise zweiten Endposition mittels Einstecken des korrespondierenden Formschlusselements, also eines Bolzens oder einer Verschraubung erreicht werden. Zusätzlich kann im Falle einer Verschraubung eine Spannkraft zur Absicherung aufgebracht werden.

Die vorstehend beschrieben Fixiereinrichtungen sind vorzugsweise erste Fixiereinrichtungen, und die Gondel weist eine oder mehrere weitere Fixiereinrichtungen auf, die zumindest in der zweiten Endposition der Bodenverkleidung mit der Bodenverkleidung einerseits und der Arbeitsbühne andererseits verbindbar sind. Die zweiten Fixiereinrichtungen sind besonders bevorzugt als Streben, insbesondere Zugstreben ausgebildet. Für die zweiten Fixiereinrichtungen weist die Gondel vorzugsweise einen oder mehrere Anschlagstützen auf, wobei die Anschlagstützen vorzugsweise im Wesentlichen radial relativ zu einer Rotationsachse des Generators in der Gondel ausgerichtet sind, sich also vertikal nach unten erstrecken und im Wesentlichen mittig in dem Gondelgehäuse angeordnet sind, besonders bevorzugt unterhalb der Arbeitsbühne und weil sich die zweiten Fixiereinrichtungen von den Anschlagstützen in Richtung der Bodenverkleidung erstrecken.

In einer weiteren bevorzugten Ausführungsform weist die Bodenverkleidung an zwei gegenüberliegenden Seiten einen sich seitlich erstreckenden Vorsprung auf, und die Dachverkleidung weist an zwei korrespondierenden gegenüberliegenden Seiten einen sich seitlich erstreckenden Absatz auf, wobei der Vorsprung und der Absatz miteinander in Anlage stehen, wenn die Bodenverkleidung sich in der zweiten, abgesenkten Endposition befindet. Die jeweiligen Seiten der Bodenverkleidung und Dachverkleidung sind vorzugsweise die linken und rechten Seiten des Gondelgehäuses, sowie optional zusätzlich die vorderen und hinteren Seiten des Gondelgehäuses. Mit Vorderseite des Gondelgehäuses ist hierbei die Rotornabenseite des Gondelgehäuses gemeint. Grundsätzlich wird die Bezeichnung links, rechts und vorne bei Orientierung des Gondelgehäuses in betriebsbereiter Position verstanden.

Die korrespondierende Anordnung von Absatz und Vorsprung zwischen Bodenverkleidung und Dachverkleidung des Gondelgehäuses gewährleistet, dass die Bodenverkleidung durch ein Hintergreifen des korrespondierenden Absatzes der Dachverkleidung in der zweiten Endposition verliersicher gehalten wird. Zusätzlich dient die Anlage zwischen Vorsprung und Absatz einer automatischen Positionierung der Bodenverkleidung relativ zur Dachverkleidung, so dass die Fixierung der Bodenverkleidung in der zweiten, abgesenkten Endposition erleichtert wird.

Die Erfindung wird dadurch vorteilhaft weitergebildet, dass die Gondel eine oder mehrere dritte Fixiereinrichtungen aufweist, die in der zweiten Endposition die Vorsprünge der Bodenverkleidung mit den Absätzen der Dachverkleidung verbinden. Vorzugsweise sind die dritten Fixiereinrichtungen als Verschraubungen ausgebildet. Durch die Verbindung, besonders bevorzugt reversibel lösbare Verbindung, zwischen der Dachverkleidung und der Bodenverkleidung an der Stelle, an der die Absätze und Vorsprünge miteinander kooperieren, wird ein dichtes Anliegen der Verkleidungsteile aneinander gewährleistet, so dass das Gondelgehäuse ohne weitere Abdichtungen zuverlässig Schutz vor Witterungseinflüssen bietet.

Besonders bevorzugt ist der Vorsprung in der Dachunterverkleidung als sich nach außen erstreckender Kragen ausgebildet, und der Absatz in der Dachverkleidung ist als sich nach innen erstreckender Absatz ausgebildet. Hierdurch wird ein Überhängen der Dachverkleidung in seitlicher Richtung über die Bodenverkleidung erreicht, so dass ein Einlaufen von Wasser, welches an dem Gondelgehäuse abläuft, ebenfalls erschwert wird.

In einer bevorzugten Ausführungsform weist die Gondel ein oder mehrere Hubwerke auf, mittels derer die Bodenverkleidung mit dem Arbeitsgerüst gekoppelt ist, wobei das oder die Hubwerke vorzugsweise als Kettenzüge oder Seilzüge ausgebildet sind. Mittels Einsatz eines oder mehrerer Hubwerke ist es mit geringem Kraftaufwand möglich, den Gondelkeller abzusenken oder anzuheben. Die Betätigung der Hubwerke kann manuell oder motorgesteuert erfolgen. Eine Motorsteuerung der Hubwerke ist insbesondere dann vorzuziehen, wenn in bevorzugten Ausführungsformen eine automatische Anhebung des Gondelkellers bei hohen Seitenwinden erfolgen soll.

Die Erfindung wurde vorstehend anhand eines ersten Aspektes unter Bezugnahme auf die Gondel selbst beschrieben. In einem weiteren Aspekt betrifft die Erfindung eine Windenergieanlage, eine getriebelose Windenergieanlage, mit einem Turm, einer auf dem Turm drehbar angeordneten Gondel, die einen Maschinenträger aufweist, welcher einen Generator und eine Rotornabe trägt, wobei an der Rotornabe eine Anzahl von Rotorblättern angeordnet sind. Erfindungsgemäß ist der Generator vorzugsweise ein Synchrongenerator. Vorzgusweise handelt es sich um einen langsam drehenden Generator. Hierunter wird ein Generator mit einer Drehzahl von 100 Umdrehungen pro Minute oder weniger, vorzugsweise 50 Umdrehungen pro Minute oder weniger, besonders bevorzugt in einem Bereich von 5 bis 35 Umdrehungen pro Minute verstanden. Der Generator kann als Außenläufer oder Innenläufergenerator ausgebildet sein.

Vorzugsweise ist der Generator ein vielpoliger Synchron-Ringgenerator. Ein solcher vielpoliger Synchron-Ringgenerator weist eine Vielzahl von Statorzähnen auf, insbesondere wenigstens 48 Statorzähne, häufig sogar deutlich mehr Statorzähne wie insbesondere 96 Statorzähne, 192 Statorzähne oder mehr. Der magnetisch aktive Bereich des Synchrongenerators, nämlich sowohl des Generatorrotors als auch des Generatorstators, ist in einem ringförmigen Bereich um die Drehachse des Synchrongenerators angeordnet.

Der Generator ist vorzugsweise fremderregt.

Die Erfindung löst bei einer solchen Windenergieanlage die eingangs bezeichnete Aufgabe, indem die Gondel der Windenergieanlage nach einer der vorstehend beschriebenen bevorzugten Ausführungsformen ausgebildet ist. Die erfindungsgemäße Windenergieanlage macht sich dementsprechend die gleichen Vorteile und die gleichen bevorzugten Ausführungsformen zunutze, wie die erfindungsgemäße Gondel, weswegen zur Vermeidung von Wiederholungen auf die obigen Ausführungen verwiesen wird.

In einem weiteren Aspekt betrifft die Erfindung ein Verfahren zur Wartung einer Windenergieanlage, wobei die Windenergieanlage eine Gondel aufweist, die ein Gondelgehäuse aufweist, welches einen Maschinenträger und ein Arbeitsgerüst zum Schutz vor Wettereinflüssen umschließt, wobei das Gondelgehäuse einen von dem Arbeitsgerüst aus zugänglichen Gondelkeller aufweist. Insbesondere ist die Windenergieanlage beziehungsweise die Gondelnach einer der vorstehend beschriebenen bevorzugten Ausführungsformen ausgebildet.

Das erfindungsgemäße Verfahren umfasst die Schritte: Eintritt in das Gondelgehäuse, Absenken des Gondelkellers, entweder vor oder nach dem Eintritt in das Gehäuse, aus einer ersten angehobenen Endposition in eine zweite, abgesenkte Endposition, und Begehen des Gondelkellers, wenn dieser sich in der abgesenkten Endposition befindet. Das Absenken des Gondelkellers kann unmittelbar vor dem Begehen des Gondelkellers erfolgen, muss es aber nicht. Das Absenken des Gondelkellers kann auch zeitlich deutlich vorgelagert erfolgen, beispielsweise bei oder nach Inbetriebnahme der Windenergieanlage. Sofern der Aufstellort der Windenergieanlage ein permanentes Belassen des Gondelkellers im abgesenkten Zustand erlaubt, ist der abgesenkte Zustand des Gondelkellers die bevorzugte Normalposition für die Bodenverkleidung der Windenergieanlage. Die Begehung des Gondelkellers kann dann beliebig häufig wiederholt werden, ohne zwischenzeitlich den Gondelkeller anheben zu müssen.

Allerdings kann ein Anheben des Gondelkellers für den Normalbetrieb der Windenergieanlage von Vorteil sein, insbesondere wenn die Windenergieanlage an Aufstellorten betrieben wird, die hohe Wind-, insbesondere hohe Seitenwindlasten erwarten lassen. Dann wird es in der Regel ratsam sein, die den Gondelkeller im Normalfall im angehobenen Zustand zu belassen. Das Gondelgehäusekonzept gemäß der vorliegenden Erfindung erlaubt jedenfalls beide Spielarten.

Vorzugsweise wird der Gondelkeller in der zweiten Endposition arretiert, entweder temporär oder permanent, wie vorstehend beschrieben.

Das Verfahren wird vorzugsweise weitergebildet, indem es den Schritt umfasst: Erfassen der auf das Gondelgehäuse wirkenden Seitenwindlast, und Anheben des Gondelkellers, sobald ein vorbestimmter Schwellenwert der erfassten Seitenwindlast erreicht oder überschritten wird. Die Seitenwindlast kann mittels Anemometrie erfasst werden, oder mittels Messen der Biegebeanspruchung des Turms, des Turmflansches, der Azimutverzahnung oder des Gondelgehäuses selbst.

Die Erfindung wird nachfolgend unter Bezugnahme auf die beigefügten Figuren anhand eines bevorzugten Ausführungsbeispiels näher beschrieben. Hierbei zeigen:
- Fig. 1: eine Windenergieanlage gemäß einem bevorzugten Ausführungsbeispiel,
- Fig. 2a,b: schematische Schnittansichten durch die Gondel der Windenergieanlage gemäß Figur 1,
- Fig, 3: eine schematische räumliche Ansicht der Gondel gemäß den Figuren 1 und 2a bis b,
- Fig. 4a,b: verschiedene schematische räumliche Ansichten der Bodenverkleidung der Gondel gemäß den Figuren 1 bis 3, und
- Fig. 5 - 6: unterschiedliche Detailansichten der Gondel gemäß den Figuren 1 bis 4b.

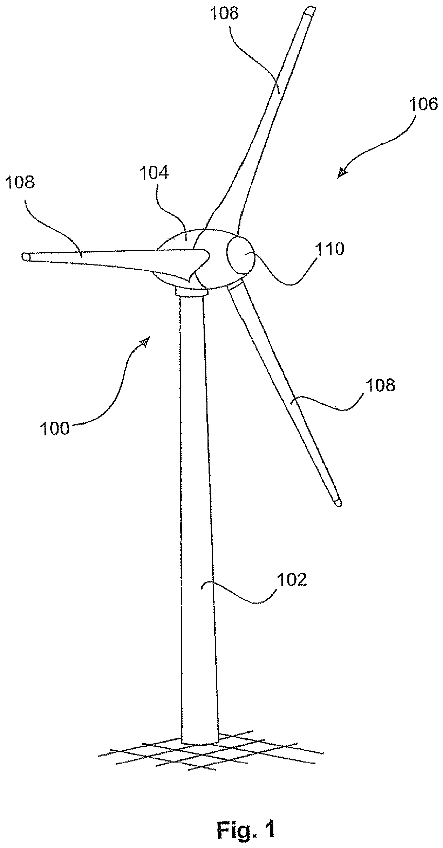

Figur 1 zeigt eine Windenergieanlage 100 mit einem Turm 102 und einer Gondel 104. An der Gondel 104 ist eine Rotornabe 106 mit drei Rotorblättern 108 und (optional) einem Spinner 110 angeordnet. Die Rotorblätter 108 sind mit ihrer Rotorblattwurzel an einer Rotornabe angeordnet. Die Rotornabe 106 wird im Betrieb durch den Wind in eine Drehbewegung versetzt und treibt dadurch einen (nicht dargestellten) Generator in der Gondel 104 an.

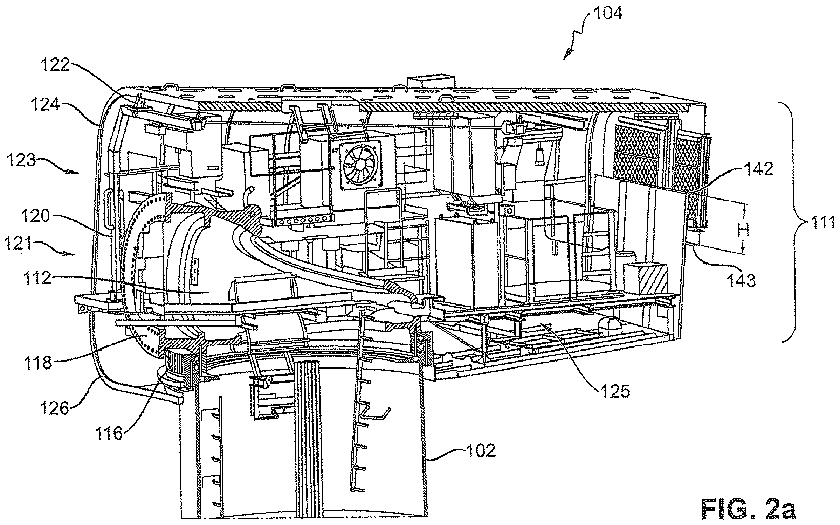

In Figur 2a ist die Gondel 104 auf dem Turm 102 in teilweise geschnittener Darstellung gezeigt. Die Gondel 104 weist ein Gondelgehäuse 111 auf, in welchem ein Maschinenträger 112 angeordnet ist. Der Maschinenträger 112 ist mittels einer Drehverbindung mit Außenverzahnung 116 relativ zu dem Turm 102 drehbar gelagert. An dem Maschinenträger 112 ist ein Anschlussflansch 118 für einen Aufnahme- oder Achszapfen, ein Momentenlager oder vergleichbare Aufbauten vorgesehen, um den Generator zur Erzeugung elektrischer Leistung und die Rotornabe 106 der Windenergieanlage 100 anzuschließen.

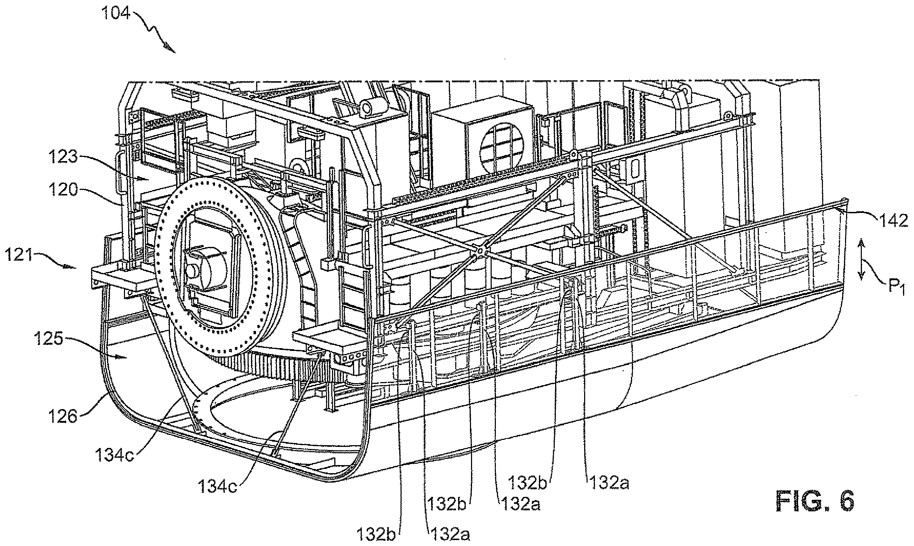

An dem Maschinenträger 112 ist ein Arbeitsgerüst 120 mit mehreren Arbeitsebenen 121, 123 vorgesehen (vgl. Figur 6). Auf dem Arbeitsgerüst sind diverse Schalt- und Steuerinstrumente sowie Messinstrumente angeordnet, mittels derer beispielsweise der Betrieb der Windenergieanlage gesteuert und überwacht wird.

Das Gondelgehäuse 111 ist im Wesentlichen zweiteilig aufgebaut und umfasst eine Dachverkleidung 124 und eine Bodenverkleidung 126. Die Dachverkleidung 124 ist an entsprechenden Auflagerpunkten 122 fest auf dem Arbeitsgerüst 120 montiert. Die Bodenverkleidung 126 definiert unterhalb des Arbeitsgerüsts 120 einen Gondelkeller 125, der im Wesentlichen das freie Volumen unterhalb des Arbeitsgerüsts ausschöpft.

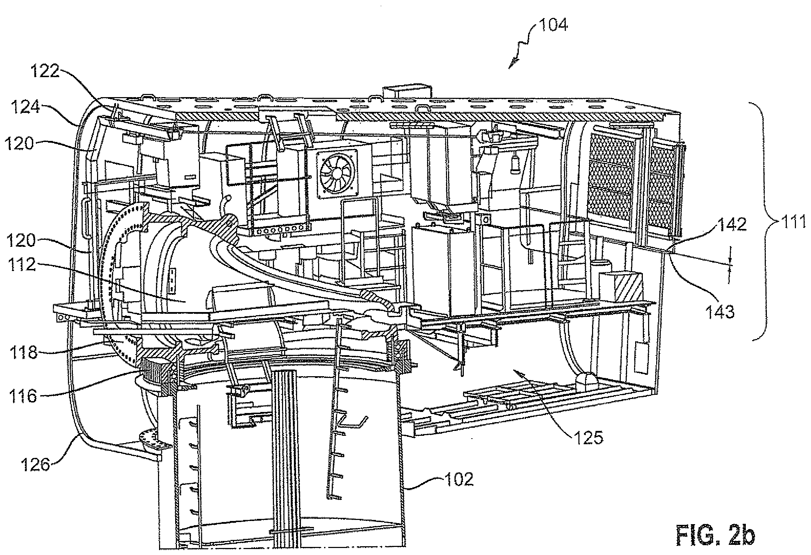

Wie ein Vergleich der Figuren 2a und 2b zeigt, ist das Volumen des Gondelkellers 125 erfindungsgemäß variabel. In Figur 2b ist die Bodenverkleidung 126 relativ zum Arbeitsgerüst 120 um den Betrag H abgesenkt, wodurch das Volumen des Gondelkellers 125 signifikant vergrößert ist. In dem Zustand gemäß Figur 2b sind auch Bereiche des Gondelkellers 125 für Wartungspersonal zugänglich, die vorher nur schwer erreichbar waren, beispielsweise der Turmflansch mit der Drehverbindung 116.

Um ein Herabfallen der Bodenverkleidung 126 zu verhindern, weist die Dachverkleidung 124, vorzugsweise umlaufend, einen Absatz 143 auf. Die Bodenverkleidung 126 weist an korrespondierenden Seitenwänden einen sich seitlich nach außen erstreckenden Vorsprung 142, vorzugsweise ebenfalls umlaufend, auf. In der in Figur 2b gezeigten abgesenkten Endposition liegt der Vorsprung 142, vorzugsweise flächig, auf dem Absatz 143 auf und wird derart in Position gehalten, dass eine Fixierung der Bodenverkleidung 126 erfolgen kann. Details zur Fixierung der Bodenverkleidung ergeben sich aus den weiteren Figuren.

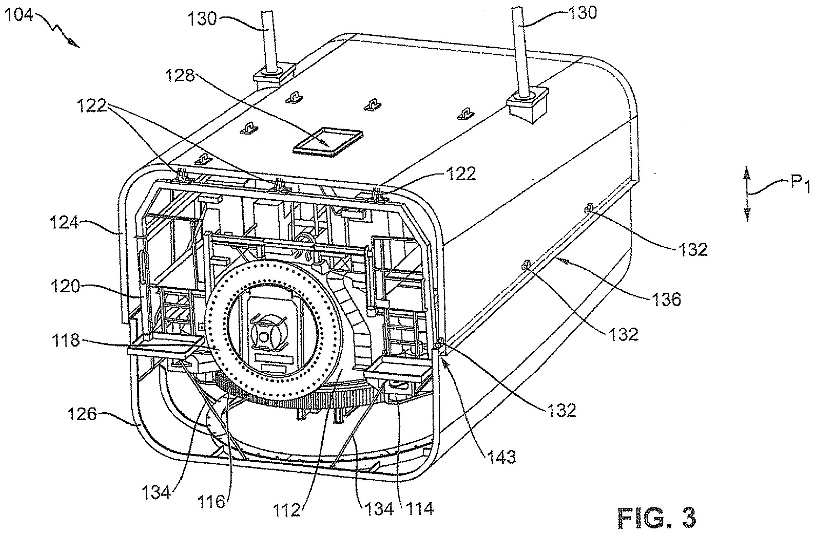

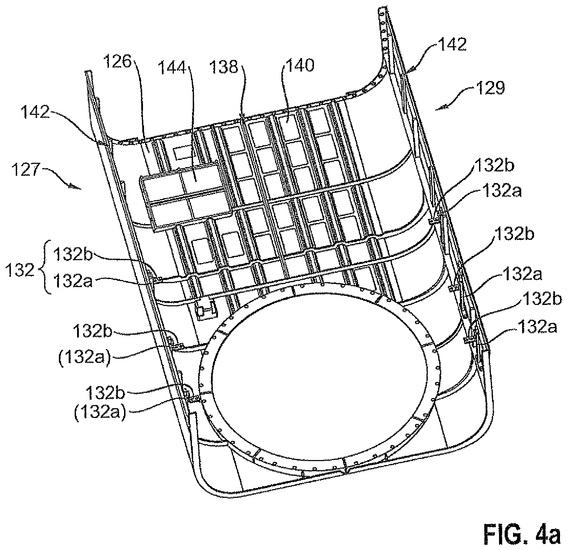

Figur 3 zeigt die Gondel 104 der Windenergieanlage gemäß Figur 1 in dem Zustand gemäß der Figur 2b, also in der abgesenkten zweiten Endposition. Die Gondelverkleidung 126 ist in Richtung des Pfeils P₁ derart abgesenkt worden, dass die Vorsprünge 142 (vgl. Figur 4a) auf dem Absatz 143 (vgl. Figur 2b) aufliegen.

Die Gondel weist mehrere erste Fixiereinrichtungen 132 auf, die zwischen dem Arbeitsgerüst 120 einerseits und der Bodenverkleidung 126 andererseits ausgebildet sind und eine Arretierung der Bodenverkleidung 126 am Arbeitsgerüst 120 wohl in der gezeigten zweiten Endposition als auch in der ersten Endposition ermöglichen (vgl. Figur 4a und 6).

Aufgrund des Ineinandergreifens der Dachverkleidung 124 und 126 ist ein Überstand 136 ausgebildet, der das Innere der Gondel 104 vor dem Eindringen beispielsweise von Regenwasser zuverlässig schützt.

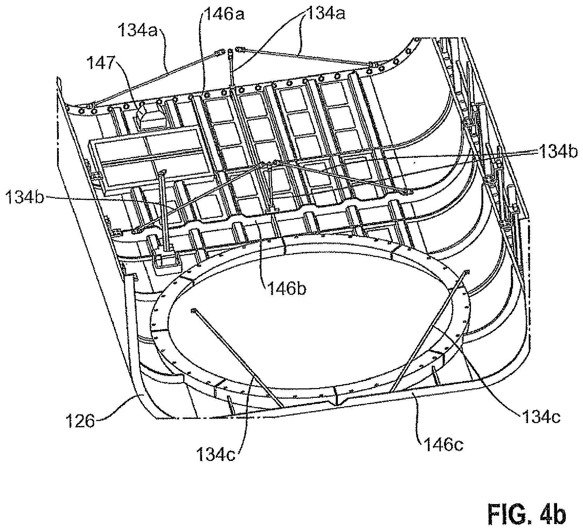

Neben den ersten Fixiereinrichtungen 132 weist die Gondel 104 eine Anzahl von zweiten Fixiereinrichtungen 134 auf, die als Streben ausgebildet sind, und mittels derer die Bodenverkleidung 126 zusätzlich mechanisch am Arbeitsgerüst 120 abgesichert wird. Die Streben 134 (beziehungsweise 134 a bis c, vgl. Figur 4b) sind vorzugsweise derart in der Gondel 104 vorgesehen, dass nur eines der Enden der Streben 134(134a bis c) ausgehängt werden muss, wenn sich die Bodenverkleidung 126 in der ersten, angehobenen Endposition befindet. Nach dem Absenken der Bodenverkleidung 126 in die zweite, abgesenkte Endposition kann dann zur zusätzlichen Absicherung das jeweilige zweite Ende der Streben mit der Bodenverkleidung 126 (oder dem Gerüst 120, je nachdem) verbunden werden.

An der Dachverkleidung 124 der Gondel 104 sind vorzugsweise ferner eine oder mehrere Masten 130 vorgesehen, an denen beispielsweise Anemometer und/ oder Flugbefeuerungseinrichtungen installiert werden können. Ferner weist die Dachverkleidung 124 eine Ein- und Ausstiegsluke 128 auf, mittels welcher vom Arbeitsgerüst 120 aus das Dach der Gondel 104 zugänglich ist.

Wie sich aus Figur 4a ergibt, sind an der Bodenverkleidung 126 mehrere Bereiche des ebenen Bodens 138 mit einem Antirutschbelag 140 versehen, um die Begehbarkeit des Gondelkellers 125 noch zu verbessern. Ferner ist im Bereich des Gondelkellers in der Bodenverkleidung 126 eine Ausstiegsluke 144 vorgesehen, aus der sich Wartungspersonal in Richtung des Turms 102 abseilen kann.

Ferner ist in Figur 4a der an den linken und rechten Seitenwänden 127, 129 verlaufende Vorsprung 142 zu erkennen.

Die ersten Fixierungsmittel 132 umfassen jeweils eine Schiene 132a, die an der Bodenverkleidung 126 befestigt ist, und eine Schienenaufnahme 132b, die am Arbeitsgerüst 120 befestigt ist (vgl. Figur 6). An der Schiene 132a und der Schienenaufnahme 132b sind jeweils Durchgangsöffnungen vorgesehen, die eine Arretierung der Schiene 132a an der Schienenaufnahme 132b sowohl in der ersten, angehobenen Endposition der Bodenverkleidung 126 als auch in der zweiten, abgesenkten Endposition mittels Bolzen, oder Schraubverbindungen ermöglichen. Die Schienenaufnahmen 132b sind vorzugsweise dazu ausgebildet, die Schienen 132a linear gleitend zu führen und insbesondere ein seitliches Pendeln der Bodenverkleidung 126 relativ zum Arbeitsgerüst 120 beziehungsweise relativ zur Dachverkleidung 124 zu limitieren. Insbesondere sind die Schienenaufnahmen 132b dazu eingerichtet, ein Verkanten der Bodenverkleidung 126 relativ zur Dachverkleidung 124 zu vermeiden. In Figur 4b, die die Bodenverkleidung 126 im Vergleich zu Figur 4a in einem leicht flacheren Winkel zeigt, sind zusätzlich die zweiten Fixiereinrichtungen 134 abgebildet, die sich in dem vorliegenden Ausführungsbeispiel aus einer Serie erster Zustreben 134a, einer zweiten Serie Zugstreben 134b und einer dritten Serie Zugstreben 134c zusammensetzen.

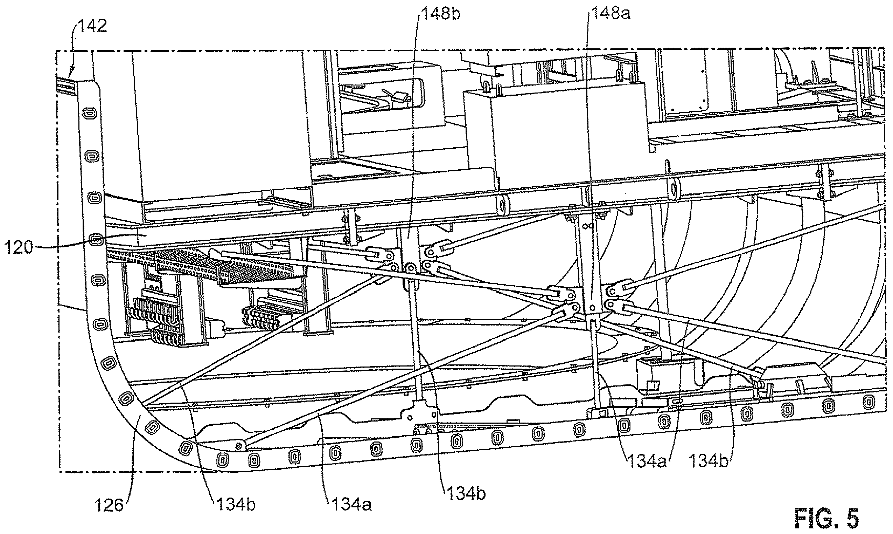

Die erste Serie von Zugstreben 134a wird in eine erste Versteifungsrippe 146a der Bodenverkleidung 126 eingehängt. Die zweite Serie Zugstreben 134b wird in eine zweite Versteifungsrippe 146b eingehängt und die dritte Serie Zugstreben 134c wird entsprechend in eine dritte Versteifungsrippe 146c der Bodenverkleidung 126 eingehängt. Optional ist in der Bodenverkleidung zusätzlich ein Leuchtstrahler 147 vorgesehen, der beispielsweise Licht nach innen in den Gondelkeller 125 oder nach außen in Richtung des Turms 102 abgeben kann. Die Streben 134a, b laufen zwischen der Bodenverkleidung 126 und jeweils einer Druckstützte 148a, b, die in etwa mittig unterhalb des Arbeitsgerüsts 120 angebracht sind, siehe Figur 5.

Vorzugsweise sind die Druckstützen 148a, b relativ zu einer Rotationsachse des Generators der Windenergieanlage radial ausgerichtet. Bei mittiger Anordnung des Generators erstrecken sich die Druckstützen 148a, b im Wesentlichen vertikal vom Arbeitsgerüst 120 abwärts.

In Figur 6 ist mithilfe einer teiltransparenten Bodenverkleidung 126 und einer ausgeblendeten Dachverkleidung 126 noch einmal schematisch der strukturelle Aufbau der Gondel 104 gezeigt. Aus Figur 6 wird insbesondere ersichtlich, wie die ersten Fixiereinrichtungen 132a, b im Zusammenspiel mit dem Arbeitsgerüst 120 angeordnet sind, um die Absenkbarkeit der Bodenverkleidung 126 in Richtung des Pfeils P₁ zu gewährleisten und zu führen. Figur 6 veranschaulicht auch, dass der zur Verfügung stehende Arbeitsraum auf dem Arbeitsgerüst 120 ungeachtet der Position der Bodenverkleidung 126 konstant bleibt. Solange also der Gondelkeller 125 nicht begangen werden muss, ist es für die Wartbarkeit der Windenergieanlage 100 unerheblich, ob der Gondelkeller 125 abgesenkt ist oder angehoben ist. Somit wird ein variables Konzept zur Verfügung gestellt, welches für jeden Aufstellort einen vorteilhaften Kompromiss zwischen geringem (Seiten-) Windwiderstand einerseits und großzügigem Arbeitsraum andererseits leistet.

## Patentansprüche

1. Gondel (104) einer Windenergieanlage (100), mit
einem Maschinenträger (112), der dazu eingerichtet ist, an einem Turm (102) der Windenergieanlage (100) installiert zu werden, und einen Generator sowie eine Rotornabe (106) der Windenergieanlage zu tragen,
einem an dem Maschinenträger installierten Arbeitsgerüst (120) mit einer oder mehreren Arbeitsebenen (121, 123), und
einem Gondelgehäuse (111), welches den Maschinenträger und das Arbeitsgerüst zum Schutz vor Wettereinflüssen umschließt, wobei das Gondelgehäuse einen von dem Arbeitsgerüst aus zugänglichen Gondelkeller (125) aufweist,
**dadurch gekennzeichnet, dass** der Gondelkeller (125) relativ zu der Arbeitsbühne (120) absenkbar ausgebildet ist.

2. Gondel nach Anspruch 1,
wobei das Gondelgehäuse eine Bodenverkleidung (126) aufweist, die den Gondelkeller (125) begrenzt, wobei die Bodenverkleidung relativ zu dem Arbeitsgerüst (120) höhenbeweglich ausgebildet ist.

3. Gondel nach Anspruch 2,
wobei zwischen der Arbeitsbühne (120) und der Bodenverkleidung (126) ein oder mehrere Fixiereinrichtungen (132) montiert sind.

4. Gondel nach Anspruch 3,
wobei die Fixiereinrichtungen (132) dazu eingerichtet sind, die Bodenverkleidung (126)wahlweise zumindest in einer ersten, angehobenen Endposition zu fixieren.

5. Gondel nach Anspruch 3 oder 4,
wobei die Fixiereinrichtungen jeweils eine an der Bodenverkleidung (126) oder dem Arbeitsgerüst (120) befestigte Schiene (132a) und eine mit der Schiene korrespondierende und an dem jeweils anderen Element befestigte Schienenaufnahme (132b) aufweisen.

6. Gondel nach einem der vorstehenden Ansprüche,
wobei die Fixiereinrichtungen (132) erste Fixiereinrichtungen sind, und die Gondel eine oder mehrere zweite Fixiereinrichtungen (134) aufweist, die zumindest in der zweiten Endposition der Bodenverkleidung mit der Bodenverkleidung (126) einerseits und der Arbeitsbühne (120) andererseits verbindbar sind.

7. Gondel nach Anspruch 6,
wobei die zweiten Fixiereinrichtungen (134) als Streben ausgebildet sind.

8. Gondel nach einem der Ansprüche 2 bis 7,
wobei die Bodenverkleidung (126) an zwei gegenüberliegenden Seiten einen sich seitlich nach außen erstreckenden Vorsprung aufweist, und die Dachverkleidung an zwei korrespondierenden gegenüberliegenden Seiten einen sich seitlich nach innen erstreckenden Absatz aufweist, und wobei der Vorsprung und der Absatz miteinander in Anlage stehen, wenn die Bodenverkleidung sich in der zweiten, abgesenkten Endposition befindet.

9. Gondel nach einem der Ansprüche 2 bis 8,
wobei die Bodenverkleidung (126) mittels eines oder mehrerer Hubwerke mit dem Arbeitsgerüst (120) gekoppelt ist, wobei vorzugsweise die Hubwerke als Kettenzüge oder Seilzüge ausgebildet sind.

10. Windenergieanlage (100), mit
einem Turm (102), einer auf dem Turm drehbar angeordneten Gondel (104), die einen Maschinenträger (112) aufweist, welcher einen Generator und eine Rotornabe (106) trägt, wobei an der Rotornabe eine Anzahl von Rotorblättern (108) angeordnet ist,
**dadurch gekennzeichnet, dass** die Gondel (104) nach einem der vorstehenden Ansprüche ausgebildet ist.

11. Verfahren zur Wartung einer Windenergieanlage,
wobei die Windenergieanlage eine Gondel aufweist, die ein Gondelgehäuse aufweist, welches einen Maschinenträger und ein Arbeitsgerüst zum Schutz vor Wettereinflüssen umschließt, wobei das Gondelgehäuse einen von dem Arbeitsgerüst aus zugänglichen Gondelkeller aufweist,
umfassend die Schritte:
Eintritt in das Gondelgehäuse, Absenken des Gondelkellers, entweder vor oder nach dem Eintritt in das Gehäuse, aus einer ersten, angehobenen Endposition in eine zweite, abgesenkte Endposition, und
Begehen des Gondelkellers, wenn sich dieser in der abgesenkten Endposition befindet.

12. Verfahren nach Anspruch 11,
wobei der Gondelkeller in der zweiten Endposition arretiert wird.

13. Verfahren nach Anspruch 11 oder 12,
umfassend den Schritt:
Erfassen der auf das Gondelgehäuse wirkenden Seitenwindlast, und
Anheben des Gondelkellers, sobald ein vorbestimmter Schwellwert der erfassten Seitenwindlast erreicht oder überschritten wird.

## Claims

1. A nacelle (104) of a wind turbine (100) comprising
a machine carrier (112) which is adapted to be installed on a tower (102) of the wind turbine (100) and to carry a generator and a rotor hub (106) of the wind turbine,
a working frame (120) installed on the machine carrier and having one or more working planes (121, 123), and
a nacelle housing (111) which encloses the machine carrier and the working frame for protection from weather influences, wherein the nacelle housing has a nacelle base compartment (125) accessible from the working frame,
**characterised in that** the nacelle base compartment (125) is adapted to be lowerable relative to the working platform (120).

2. A nacelle according to claim 1
wherein the nacelle housing has a bottom cover (126) which delimits the nacelle base compartment (125), wherein the bottom cover is adapted to be movable in height relative to the working frame (120).

3. A nacelle according to claim 2
wherein one or more fixing devices (132) are mounted between the working frame (120) and the bottom cover (126).

4. A nacelle according to claim 3
wherein the fixing devices (132) are adapted to fix the bottom cover (126) selectively at least in a first raised end position.

5. A nacelle according to claim 3 or claim 4
wherein the fixing devices respectively have a rail (132a) fixed to the bottom cover (126) or the working frame (120) and a rail receiving means (132b) corresponding to the rail and fixed to the respective other element.

6. A nacelle according to one of the preceding claims
wherein the fixing devices (132) are first fixing devices and the nacelle has one or more second fixing devices (134) which at least in the second end position of the bottom cover can be connected to the bottom cover (126) on the one hand and the working platform (120) on the other hand.

7. A nacelle according to claim 6
wherein the second fixing devices (134) are in the form of struts.

8. A nacelle according to one of claims 2 to 7
wherein the bottom cover (126) at two opposite sides has a laterally outwardly extending projection and the roof cover at two corresponding oppositely disposed sides has a laterally inwardly extending step and wherein the projection and the step are in contact with each other when the bottom cover is in the second, lowered, end position.

9. A nacelle according to one of claims 2 to 8
wherein the bottom cover (126) is coupled to the working frame (120) by means of one or more hoist mechanisms, wherein preferably the hoist mechanisms are in the form of chain hoists or cable hoists.

10. A wind turbine (100) comprising
a tower (102), a nacelle (104) arranged rotatably on the tower and having a machine carrier (112) carrying a generator and a rotor hub (106), wherein a number of rotor blades (108) are arranged on the rotor hub,
**characterised in that** the nacelle (104) is designed according to one of the preceding claims.

11. A method of maintaining a wind turbine
wherein the wind turbine has a nacelle having a nacelle housing which encloses a machine carrier and a working frame for protection from weather influences, wherein the nacelle housing has a nacelle base compartment accessible from the working frame,
including the steps:
entering the nacelle housing,
lowering the nacelle base compartment either before or after entering the housing from a first raised end position into a second lowered end position, and
going into the nacelle base compartment when it is in the lowered end position.

12. A method according to claim 11
wherein the nacelle base compartment is arrested in the second end position.

13. A method according to claim 11 or claim 12
including the steps:
detecting the cross wind loading acting on the nacelle housing, and
raising the nacelle base compartment as soon as a predetermined threshold value of the detected cross wind loading is reached or exceeded.

## Revendications

1. Nacelle (104) d'une éolienne (100), avec
un support de machines (112) qui est mis au point pour être installé sur une tour (102) de l'éolienne (100) et pour supporter un générateur ainsi qu'un moyeu de rotor (106) de l'éolienne,
un échafaudage (120) installé sur le support de machines avec un ou plusieurs plans de travail (121, 123), et
un carter de nacelle (111), lequel entoure le support de machines et l'échafaudage pour la protection contre les intempéries extérieures, dans laquelle le carter de nacelle présente un fond de nacelle (125) accessible depuis l'échafaudage,
**caractérisée en ce que** le fond de nacelle (125) est réalisé de manière à pouvoir être abaissé par rapport à la plate-forme de travail (120).

2. Nacelle selon la revendication 1,
dans laquelle le carter de nacelle présente un habillage au sol (126), qui délimite le fond de nacelle (125), dans lequel l'habillage au sol est réalisé de manière mobile en hauteur par rapport à l'échafaudage (120) .

3. Nacelle selon la revendication 2,
dans laquelle un ou plusieurs dispositifs de blocage (132) sont montés entre la plate-forme de travail (120) et l'habillage au sol (126).

4. Nacelle selon la revendication 3,
dans laquelle les dispositifs de blocage (132) sont mis au point pour bloquer l'habillage au sol (126) au choix au moins dans une première position finale relevée.

5. Nacelle selon la revendication 3 ou 4,
dans laquelle les dispositifs de blocage présentent respectivement un rail (132a) fixé sur l'habillage au sol (126) ou sur l'échafaudage (120) et un logement de rail (132b) correspondant au rail et fixé sur l'autre élément respectivement.

6. Nacelle selon l'une quelconque des revendications précédentes,
dans laquelle les dispositifs de blocage (132) sont des premiers dispositifs de blocage, et la nacelle présente un ou plusieurs deuxièmes dispositifs de blocage (134), qui peuvent être reliés d'une part à l'habillage au sol (126) et d'autre part à la plate-forme de travail (120) au moins dans la deuxième position finale de l'habillage au sol.

7. Nacelle selon la revendication 6,
dans laquelle les deuxièmes dispositifs de blocage (134) sont réalisés en tant qu'entretoises.

8. Nacelle selon l'une quelconque des revendications 2 à 7,
dans laquelle l'habillage au sol (126) présente sur deux côtés se faisant face une partie faisant saillie s'étendant latéralement vers l'extérieur, et l'habillage de toit présente sur deux côtés se faisant face correspondants un retrait s'étendant latéralement vers l'intérieur, et dans laquelle la partie faisant saillie et le retrait sont en appui l'un avec l'autre quand l'habillage au sol se trouve dans la deuxième position finale abaissée.

9. Nacelle selon l'une quelconque des revendications 2 à 8,
dans laquelle l'habillage au sol (126) est couplé à l'échafaudage (120) au moyen d'un ou de plusieurs mécanismes de levage, dans laquelle de préférence les mécanismes de levage sont réalisés en tant que palans à chaîne ou câbles de traction.

10. Eolienne (100) avec
une tour (102), une nacelle (104) disposée de manière à pouvoir tourner sur la tour, qui présente un support de machines (112), lequel supporte un générateur et un moyeu de rotor (106), dans laquelle un nombre de pales de rotor (108) est disposé sur le moyeu de rotor,
**caractérisée en ce que** la nacelle (104) est réalisée selon l'une quelconque des revendications précédentes.

11. Procédé de maintenance d'une éolienne,
dans lequel l'éolienne présente une nacelle, qui présente un carter de nacelle, lequel renferme un support de machines et un échafaudage pour la protection contre les intempéries, dans lequel le carter de nacelle présente un fond de nacelle accessible depuis l'échafaudage,
comprenant les étapes :
d'entrée dans le carter de nacelle,
d'abaissement du fond de nacelle, soit avant soit après l'entrée dans le carter, depuis une première position finale relevée dans une deuxième position finale abaissée, et
de circulation sur le fond de nacelle quand celle-ci se trouve dans la position finale abaissée.

12. Procédé selon la revendication 11,
dans lequel le fond de nacelle est arrêté dans la deuxième position finale.

13. Procédé selon la revendication 11 ou 12, comprenant l'étape :
de détection de la charge latérale due à l'action du vent agissant sur le carter de nacelle, et
de relevage du fond de nacelle dès qu'une valeur de seuil prédéfinie de la charge latérale due à l'action du vent détectée est atteinte ou dépassée.
